# EUROPEAN PATENT APPLICATION

(11) **EP 4 290 282 A1**
(43) Date of publication of application: **13.12.2023**
(21) Application number: 22749564.5
(22) Date of filing: 26.01.2022
(51) Int. Cl.: G02B 5/30, B42D 25/364, B42D 25/391, G02B 5/26

(54) **OPTICAL LAYERED PRODUCT, METHOD FOR DETERMINING AUTHENTICITY THEREOF, AND ARTICLE**

(30) Priority: 05.02.2021 JP 2021017528
(71) Applicant: Zeon Corporation, Tokyo 100-8246 (JP)
(72) Inventor: FUJINO, Yasuhide, Tokyo 100-8246 (JP)
(74) Representative: Maiwald GmbH
(86) International application number: PCT/JP2022/002820
(87) International publication number: WO 2022/168690

(57) **Abstract**

An optical layered body comprising a polarized light separation layer and a first display layer, wherein: the polarized light separation layer includes a plurality of reflective layers containing a resin having cholesteric regularity; the plurality of reflective layers each have a polarized light reflection wavelength range in which the reflective layer can reflect circularly polarized light having one rotation direction D_{A} and transmit circularly polarized light having a rotation direction opposite to the one rotation direction D_{A}; the first display layer contains a resin having cholesteric regularity; and the first display layer has a first display wavelength range in which the first display layer can reflect circularly polarized light having a rotation direction D_{B1} which is the same as the rotation direction D_{A} and transmit circularly polarized light having a rotation direction opposite to the rotation direction Dₐᵢ.

## Description

### Technical Field

The present invention relates to an optical layered body and a method for determining authenticity thereof, and an article including the optical layered body.

### Background Art

In order to determine whether an article is an authentic product supplied from an original manufacturer, an identification medium that cannot be easily replicated is generally provided in the article. As such an identification medium, an optical layered body formed using a resin having cholesteric regularity has been known (Patent Literature 1). Techniques like those described in Patent Literatures 2 and 3 have also been known.

### Citation List

### Patent Literature

Patent Literature 1: International Publication No. 2020/004155
Patent Literature 2: International Publication No. 2018/079606
Patent Literature 3: Japanese Patent No. 5828182

### Summary of The Invention

### Technical Problem

In general, the resin having cholesteric regularity can reflect circularly polarized light having either a clockwise rotation direction or a counterclockwise rotation direction and transmit circularly polarized light having a rotation direction opposite to the above rotation direction. Patent Literature 1 proposes an optical layered body in which, using the function of the resin having cholesteric regularity, an image visually recognized when one surface thereof is observed differs from an image visually recognized when another surface thereof is observed although the optical layered body is transparent or translucent.

When reflected light observation of the front surface of the optical layered body described in Patent Literature 1 is carried out, a layer provided on the front surface can be visually recognized. However, when the optical layered body is turned over and reflected light observation of the rear surface thereof is carried out, the layer provided on the front surface can be concealed although the optical layered body itself is transparent or translucent. Therefore, although the optical layered body is transparent or translucent, an image visually recognized when reflected light observation of the front surface is carried out can differ from an image visually recognized when reflected light observation of the rear surface is carried out. Unless otherwise specified, the " reflected light observation" means observation in which reflected light of illumination light is observed.

However, in the optical layered body described in Patent Literature 1, concealability of a layer provided on a surface opposite with respect to a surface of which reflected light observation is carried out is low. Specifically, when reflected light observation of the front surface of the optical layered body is carried out, the layer provided on the rear surface can be slightly seen. When reflected light observation of the rear surface of the optical layered body is carried out, the layer provided on the front surface can be slightly seen. When the concealability of the layer provided on the surface opposite with respect to the surface of which reflected light observation is carried out is low, an authenticity identification capability may be reduced.

The present invention has been made in view of the above-mentioned problems. An object of the present invention is to provide an optical layered body, having excellent concealability of a layer provided on a surface opposite with respect to a surface of which reflected light observation is carried out, and a method for determining authenticity thereof, and an article including the optical layered body.

### Solution to Problem

The present inventor has intensively studied to solve the above-mentioned problems. As a result, the present inventor has found that the above-mentioned problems can be solved by an optical layered body including a polarized light separation layer and a first display layer, the polarized light separation layer including a plurality of reflective layers that contain a resin having cholesteric regularity, the first display layer containing the resin having cholesteric regularity, wherein the reflective layers and the first display layer have a specific circularly polarized light separation function. The present invention has thus been completed.

Specifically, the present invention includes as follows.
[1] An optical layered body comprising a polarized light separation layer and a first display layer, wherein:
   the polarized light separation layer includes a plurality of reflective layers containing a resin having cholesteric regularity;
   the plurality of reflective layers each have a polarized light reflection wavelength range in which the reflective layer can reflect circularly polarized light having one rotation direction D_{A} and transmit circularly polarized light having a rotation direction opposite to the one rotation direction D_{A};
   the first display layer contains a resin having cholesteric regularity; and
   the first display layer has a first display wavelength range in which the first display layer can reflect circularly polarized light having a rotation direction D_{B1} which is the same as the rotation direction D_{A} and transmit circularly polarized light having a rotation direction opposite to the rotation direction D_{B1}.
[2] The optical layered body according to [1], wherein the polarized light reflection wavelength ranges of the plurality of reflective layers are different from one another.
[3] The optical layered body according to [1] or [2], wherein at least one of the polarized light reflection wavelength ranges of the plurality of reflective layers contains the first display wavelength range of the first display layer.
[4] The optical layered body according to any one of [1] to [3], wherein
   the plurality of reflective layers include:
   a reflective layer B having a reflection center wavelength in a wavelength range of 420 nm to 480 nm;
   a reflective layer G having a reflection center wavelength in a wavelength range of 510 nm to 580 nm; and
   a reflective layer R having a reflection center wavelength in a wavelength range of 600 nm to 640 nm.
[5] The optical layered body according to any one of [1] to [4], wherein each of degrees of circular polarization of transmitted light of the plurality of reflective layers is 0.6 or more.
[6] The optical layered body according to any one of [1] to [5], comprising a second display layer, the polarized light separation layer, and the first display layer in this order, and wherein:
   the second display layer contains a resin having cholesteric regularity; and
   the second display layer has a second display wavelength range in which the second display layer can reflect circularly polarized light having a rotation direction D_{B2} which is the same as the rotation direction D_{A} and transmit circularly polarized light having a rotation direction opposite to the rotation direction D_{B2}.
[7] The optical layered body according to [6], wherein at least one of the polarized light reflection wavelength ranges of the plurality of reflective layers contains the second display wavelength range of the second display layer.
[8] A method for determining authenticity of the optical layered body according to any one of [1] to [7], the method comprising the steps of:
   observing, from a side of the first display layer, reflected light of light for illuminating the side of the first display layer of the optical layered body to determine whether the first display layer can be visually recognized; and
   observing, from a side opposite with respect to the first display layer, reflected light of light for illuminating the side of the optical layered body opposite with respect to the first display layer to determine whether the first display layer can be visually recognized.
[9] A method for determining authenticity of the optical layered body according to [6] or [7], the method comprising the steps of:
   observing, from a side of the first display layer, reflected light of light for illuminating the side of the first display layer of the optical layered body to determine whether the first display layer and the second display layer can be visually recognized; and
   observing, from a side opposite with respect to the first display layer, reflected light of light for illuminating the side of the optical layered body opposite with respect to the first display layer to determine whether the first display layer and the second display layer can be visually recognized.
[10] An article comprising the optical layered body according to any one of [1] to [7].

### Advantageous Effects of Invention

According to the present invention, an optical layered body, having excellent concealability of a layer provided on a surface opposite with respect to a surface of which reflected light observation is carried out, and a method for determining authenticity thereof, and an article including the optical layered body can be provided.

### Brief Description of Drawings

FIG. 1 is a cross-sectional view schematically illustrating an optical layered body according to a first embodiment of the present invention.
FIG. 2 is a spectrum view illustrating a reflection spectrum of a reflective layer according to an example for illustration of a polarized light reflection wavelength range.
FIG. 3 is a graph showing, for illustration of a degree of circular polarization of transmitted light, a degree of polarization of transmitted light that has been transmitted through a reflective layer according to an example at each wavelength.
FIG. 4 is a cross-sectional view schematically illustrating the optical layered body according to the first embodiment of the present invention.
FIG. 5 is a cross-sectional view schematically illustrating the optical layered body according to the first embodiment of the present invention.
FIG. 6 is a cross-sectional view schematically illustrating an optical layered body according to a second embodiment of the present invention.
FIG. 7 is a perspective view schematically illustrating a booklet as an article according to a third embodiment of the present invention.
FIG. 8 is a perspective view schematically illustrating the booklet as the article according to the third embodiment of the present invention.

### Description of Embodiments

Hereinafter, the present invention will be described in detail with reference to embodiments and examples. However, the present invention is not limited to embodiments and examples described below, and may be freely modified for implementation without departing from the scope of claims of the present invention and the scope of their equivalents.

In the following description, an in-plane retardation Re of a layer is a value represented by Re = (nx - ny) × d unless otherwise specified. Herein, nx represents a refractive index in a direction in which the maximum refractive index is given among directions (in-plane directions) perpendicular to the thickness direction of the layer, ny represents a refractive index in a direction, among the above-mentioned in-plane directions, perpendicular to the direction giving nx, and d represents the thickness of the layer. The measurement wavelength is 550 nm unless otherwise specified.

In the following description, a visible wavelength range refers to a wavelength range of 400 nm or longer and 780 nm or shorter, unless otherwise specified.

In the following description, an angle formed by optical axes (polarized light transmission axis, slow axis, etc.) refers to an angle as seen in the thickness direction.

In the following description, the term "circularly polarized light" may include elliptically polarized light within a range in which the advantageous effects of the present invention are not significantly impaired, unless otherwise specified.

### [1. First embodiment of optical layered body]

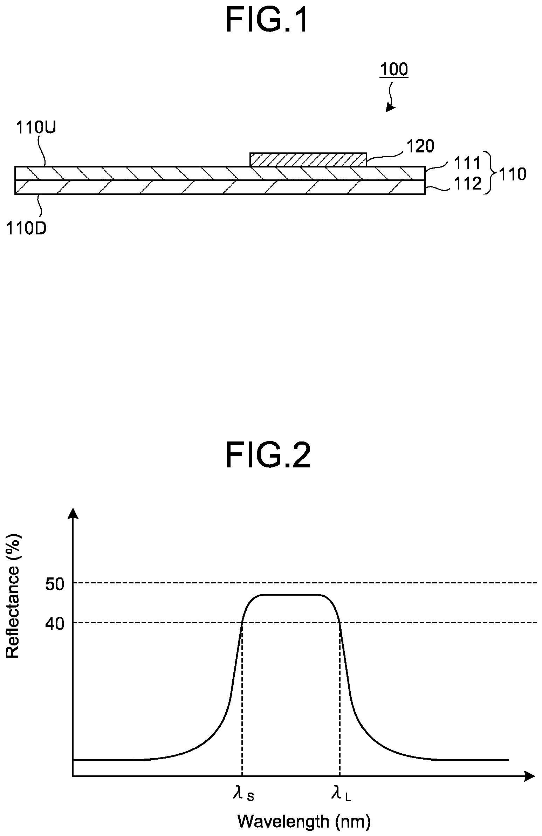

FIG. 1 is a cross-sectional view schematically illustrating an optical layered body 100 according to a first embodiment of the present invention.

As shown in FIG. 1, the optical layered body 100 according to the first embodiment of the present invention includes a polarized light separation layer 110 and a first display layer 120.

Specifically, the polarized light separation layer 110 has a first surface 110U as a main surface and a second surface 110D as another main surface opposite with respect to the first surface 110U. The first display layer 120 is disposed directly or indirectly on one of the first surface 110U and the second surface 110D. A layer disposed "directly" on a surface means that another layer is not present between the surface and the layer. A layer disposed "indirectly" on a surface means that another layer (adhesion layer, and the like) is present between the surface and the layer. In the present embodiment, an example in which the first display layer 120 is disposed on the first surface 110U of the polarized light separation layer 110 is shown for description.

The first display layer 120 may be disposed on a part of the first surface 110U of the polarized light separation layer 110 or on the entire first surface 110U. The first display layer 120 is generally disposed so as to overlap with reflective layers 111 and 112 of the polarized light separation layer 110 as viewed in the thickness direction. That is, in in-plane directions perpendicular to the thickness direction of the optical layered body 100, a position of a part or the entirety of the first display layer 120 is generally the same as a position of a part or the entirety of the reflective layers 111 and 112. In the present embodiment, as viewed in the thickness direction, the entirety of the first display layer 120 overlaps with a part of the reflective layers 111 and 112 of the polarized light separation layer 110. Herein, a certain layer "overlapping" with another layer means that, when a planer positional relationship between the layers is observed in the thickness direction, the layers are present at least partly at the same planar position.

The first display layer 120 may generally have a planer shape according to the design of the optical layered body 100. Unless otherwise specified, the "planer shape" represents a shape viewed in the thickness direction. Examples of the planer shape of the first display layer 120 may include, but are not limited to, characters, numerals, symbols, and figures.

### (1.1. Polarized light separation layer)

The polarized light separation layer 110 includes the plurality of reflective layers 111 and 112 having a wavelength range in which the reflective layer can exhibit a circularly polarized light separation function. The "circularly polarized light separation function" means a function of reflecting circularly polarized light having either a clockwise rotation direction or a counterclockwise rotation direction and transmitting circularly polarized light having the other rotating direction. In the following description, the wavelength range in which the reflective layers 111 and 112 can exhibit the circularly polarized light separation function may be referred to as a "polarized light reflection wavelength range" as appropriate. Therefore, the reflective layers 111 and 112 included in the polarized light separation layer 110 each have a polarized light reflection wavelength range in which the reflective layers 111 and 112 can reflect circularly polarized light having one rotation direction D_{A} and transmit circularly polarized light having a rotation direction opposite to the rotation direction D_{A}. The reflectance of the reflective layers 11 and 112 with respect to unpolarized light in the polarized light reflection wavelength range is usually 40% to 50%.

The number of the reflective layers 111 and 112 included in the polarized light separation layer 110 may be two or three or more. In the present embodiment, an example in which the polarized light separation layer 110 includes two reflective layers 111 and 112 is shown for description. The rotation directions of circularly polarized light reflected by the respective reflective layers 111 and 112 are the same, and are the rotation direction D_{A}.

It is preferable that the reflective layers 111 and 112 included in the polarized light separation layer 110 have polarized light reflection wavelength ranges different from each other. Two "different" polarized light reflection wavelength ranges mean that there is a wavelength range that does not overlap in the polarized light reflection wavelength ranges. When the plurality of reflective layers 111 and 112 have different polarized light reflection wavelength ranges, the latitude of color of the entire polarized light separation layer 110 can be increased.

One or two or more of the reflective layers 111 and 112 included in the polarized light separation layer 110 may have a reflection center wavelength in a wavelength range of 420 nm to 480 nm. Unless otherwise specified, the reflection center wavelength of a reflective layer refers to the center wavelength of polarized light reflection wavelength range of the reflective layer. A reflective layer having a reflection center wavelength in a wavelength range of 420 nm to 480 nm may be referred to as "reflective layer B". The reflection center wavelength of the reflective layer B is preferably 420 nm or more, more preferably 430 nm or more, and particularly preferably 440 nm or more, and is preferably 480 nm or less, more preferably 470 nm or less, and particularly preferably 460 nm or less.

One or two or more of the reflective layers 111 and 112 included in the polarized light separation layer 110 may have a reflection center wavelength in a wavelength range of 510 nm to 580 nm. A reflective layer having a reflection center wavelength in a wavelength range of 510 nm to 580 nm may be referred to as "reflective layer G". The reflection center wavelength of the reflective layer G is preferably 510 nm or more, more preferably 520 nm or more, and particularly preferably 530 nm or more, and is preferably 580 nm or less, more preferably 570 nm or less, and particularly preferably 560 nm or less.

One or two or more of the reflective layers 111 and 112 included in the polarized light separation layer 110 may have a reflection center wavelength in a wavelength range of 600 nm to 640 nm. A reflective layer having a reflection center wavelength in a wavelength range of 600 nm to 640 nm may be referred to as "reflective layer R". The reflection center wavelength of the reflective layer R is preferably 600 nm or more, more preferably 605 nm or more, and particularly preferably 610 nm or more, and is preferably 640 nm or less, more preferably 635 nm or less, and particularly preferably 630 nm or less.

It is preferable that the plurality of reflective layers included in the polarized light separation layer 110 include the reflective layers R, G, and B in combination. According to the combination of the reflective layers R, G, and B, the entire polarized light separation layer 110 can exhibit the circularly polarized light separation function over a wide range in the visible wavelength range. Therefore, the latitude of color of the first display layer 120 can be increased.

From the viewpoint of achieving a display mode capable of being viewed with the naked eye, the polarized light reflection wavelength range of each of the reflective layers 111 and 112 is preferably within the visible wavelength range.

The wavelength width of the polarized light reflection wavelength range of each of the reflective layers 111 and 112 may be set according to the design of the optical layered body 100. The wavelength widths of the polarized light reflection wavelength ranges of the reflective layers 111 and 112 are each independently preferably 50 nm or more, more preferably 60 nm or more, and particularly preferably 75 nm or more, and is preferably 300 nm or less, more preferably 200 nm or less, and particularly preferably 100 nm or less.

The polarized light reflection wavelength range of a reflective layer is determined by measuring the reflectance when the reflective layer is irradiated with unpolarized light using an ultraviolet-visible spectrophotometer (for example, "UV-Vis 550" manufactured by JASCO Corporation). Hereinafter, a method for measuring the polarized light reflection wavelength range will be described in detail with an example.

FIG. 2 is a spectrum view illustrating a reflection spectrum of a reflective layer according to an example for illustration of the polarized light reflection wavelength range. A case where the reflective layer is irradiated with unpolarized light, the reflectance at each wavelength is measured, and the reflection spectrum shown in FIG. 2 is obtained will be described with reference to an example. When this reflection spectrum has a peak at which the reflectance is 40% or more, the wavelength range in which the reflectance is 40% or more is the polarized light reflection wavelength range. Thus, when a wavelength λ_{S} at which the reflectance is 40% and that is at a shorter wavelength side and a wavelength λ_{L} at which the reflectance is 40% and that is at a longer wavelength side are present in the above-mentioned peak, a wavelength range ranging from the wavelength λ_{S} to the wavelength λ_{L} is the polarized light reflection wavelength range. A center wavelength ((λ_{S}+λ_{L})/2) between the wavelength λ_{S} and the wavelength λ_{L} is the reflection center wavelength of the reflective layer that acts as the center wavelength of the polarized light reflection wavelength range.

Each of degrees of circular polarization of transmitted light of the reflective layers 111 and 112 is independently preferably 0.6 or more, more preferably 0.7 or more, and further preferably 0.8 or more. The upper limit of the degree of circular polarization of transmitted light is not particularly limited, and is usually 1.0 or less. In the optical layered body 100 including the polarized light separation layer 110 which includes the reflective layers 111 and 112 with such a high degree of circular polarization of transmitted light, the concealability of the first display layer 120 can be effectively enhanced when reflected light observation of the surface (the second surface 110D) opposite with respect to the first display layer 120 is carried out.

The degree of circular polarization of transmitted light of the reflective layer is an indicator representing the ratio of circularly polarized light contained in transmitted light obtained when the reflective layer is irradiated with unpolarized light. This degree may be measured by the following method.

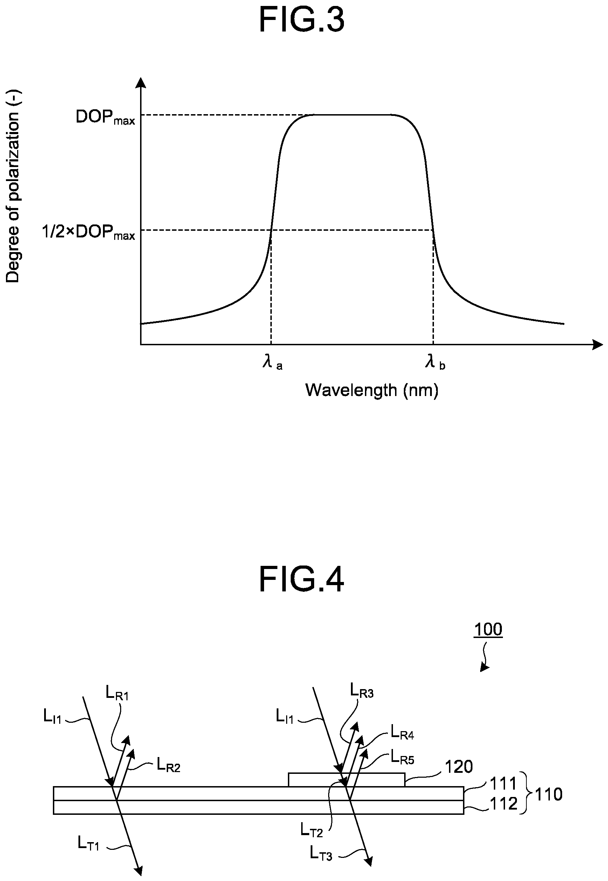

FIG. 3 is a graph showing, for illustration of the degree of circular polarization of transmitted light, the degree of polarization of transmitted light that has been transmitted through the reflective layer according to an example at each wavelength. A case will be described with reference to an example in which a reflective layer is irradiated with unpolarized light, and the degree of polarization at each wavelength of light having been transmitted through the reflective layer is measured to obtain the graph shown in FIG. 3. From the degree of polarization as measured, the highest degree of polarization (maximum degree of polarization) DOPₘₐₓ is identified. Wavelengths λa and λb at which a degree of polarization that is a half value of the maximum degree of polarization DOPₘₐₓ is measured are identified (λa < λb). An average of the degree of polarization in a wavelength range ranging from the wavelength λa to the wavelength λb can be calculated as the degree of circular polarization of transmitted light of the reflective layer.

A degree of polarization P of a layer at a certain wavelength may be measured with a polarimeter ("AxoScan high-speed high-precision Mueller matrix polarimeter" manufactured by Axometrics, Inc.). From the maximum transmittance Tmax and the minimum transmittance Tmin among the transmittance of linearly polarized light that has a vibration direction in any angular direction θ (0° ≤ θ < 360°) through the layer, the transmittance of elliptically polarized light that has an ellipse long-axis direction in any angular direction θ (0° ≤ θ < 360°) through the layer, the transmittance of clockwise circularly polarized light through the layer, and the transmittance of counterclockwise circularly polarized light through the layer, this degree of polarization P is determined by "P = (Tmax - Tmin)/(Tmax + Tmin)". A specific degree of polarization P may be obtained from an output of measurement item "TOTAL POLARIZANCE" in measurement in the thickness direction (incidence angle: 0°) of the layer with the polarimeter.

From the viewpoint of obtaining the circularly polarized light separation function, the reflective layers 111 and 112 contain a resin having cholesteric regularity. Hereinafter, the resin having cholesteric regularity may be referred to as "cholesteric resin" as appropriate. Since the cholesteric resin is usually formed in a layer shape, the reflective layers 111 and 112 may contain a layer of the cholesteric resin.

The cholesteric regularity is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules inside a layer have cholesteric regularity, molecular axes of the molecules on a first plane inside the layer are aligned along a constant direction. On the subsequent second plane stacking on the first plane inside the layer, a direction of molecular axes is shifted by a slight angle from the direction of the molecular axes on the first plane. On the subsequent third plane further stacking on the second plane, a direction of molecular axes is further shifted by an angle from the direction of the molecular axes on the second plane. In this manner, on the planes disposed in a stacking manner, the angles of the molecular axes on these planes are sequentially shifted (twisted). The structure in which the directions of the molecular axes are twisted in this manner is usually a helical structure and is an optically chiral structure. The cholesteric resin having cholesteric regularity can generally exhibit the circularly polarized light separation function. In reflection in the cholesteric resin, circularly polarized light is usually reflected while chirality thereof is maintained.

A specific wavelength at which the cholesteric resin exhibits the circularly polarized light separation function generally depends on the pitch of the helical structure in the cholesteric resin. The pitch of the helical structure is a distance in a plane normal direction, from the start of gradual shifting of the direction of molecular axes with an angle in the helical structure as proceeding through planes, to the return to the original direction of molecular axes. By changing the size of the pitch of the helical structure, the wavelength at which the circularly polarized light separation function is exhibited can be changed. For example, a method described in Japanese Patent Application Laid-Open No. 2009-300662 A may be used as a method for adjusting a pitch. Specific examples of the method may include a method in which the type of the chiral agent is adjusted or the amount of chiral agent is adjusted in a cholesteric liquid crystal composition.

In the layer of the cholesteric resin, the size of pitch of the helical structure may be continuously changed. The layer of the cholesteric resin in which the size of pitch of the helical structure is continuously changed can be obtained, for example, by subjecting a layer of a liquid crystal composition to a band broadening treatment, including an irradiation treatment with an active energy ray and/or a warming treatment, once or more times, and then curing the resulting layer of the liquid crystal composition. According to the band broadening treatment described above, the pitch of the helical structure can be continuously changed in the thickness direction. Therefore, the wavelength range (reflection band) in which the layer of the cholesteric resin can exhibit the circularly polarized light separation function can thus be enlarged. Accordingly, the treatment is called as a band broadening treatment.

From the viewpoint of increasing the degree of circular polarization of transmitted light of the reflective layers 111 and 112 to effectively enhance the concealability of the first display layer 120, the pitch of the helical structure in each of the reflective layers 111 and 112 is preferably constant. When the pitch of the helical structure is constant, the degree of circular polarization of transmitted light generally tends to be increased while the width of the polarized light reflection wavelength range of each of the reflective layers 111 and 112 generally tends to be decreased. In the cholesteric resin obtained using a cholesteric liquid crystal composition, the wavelength width Δλ of a wavelength range in which the cholesteric resin can exhibit the circularly polarized light reflection function may be "Δλ = Δn × p", and the center wavelength λc of the wavelength range may be "λc = n × p". Herein, n represents the average refractive index of a liquid crystal compound contained in the cholesteric liquid crystal composition, Δn represents the anisotropy of refractive index of molecule of the liquid crystal compound, and p represents the pitch of the helical structure.

Although there is no limitation on the method for producing the reflective layers 111 and 112 containing the cholesteric resin, the reflective layers can be generally produced using a cholesteric liquid crystal composition. The cholesteric liquid crystal composition refers to a composition capable of exhibiting a liquid crystal phase (cholesteric liquid crystal phase) in which a liquid crystal compound has cholesteric regularity when the liquid crystal compound contained in the liquid crystal composition is oriented. A material referred to herein as a "liquid crystal composition" for convenience includes not only a mixture of two or more substances, but also a material composed of a single substance. The reflective layers 111 and 112 can be obtained, for example, as a layer of a cholesteric resin by forming a film of a cholesteric liquid crystal composition on a suitable support and curing the film of the cholesteric liquid crystal composition. Specific examples of the method for producing a layer of a cholesteric resin may include methods described in Japanese Patent Application Laid-Open No. 2014-174471 A and Japanese Patent Application Laid-Open No. 2015-27743 A. In the production method using such a cholesteric liquid crystal composition, the twisting direction in the cholesteric regularity can be appropriately selected depending on the structure of a chiral agent contained in the liquid crystal composition. For example, when the twisting direction is to be a clockwise direction, a cholesteric liquid crystal composition containing a chiral agent for imparting dextrorotation may be used, and when the twisting direction is to be a counterclockwise direction, a cholesteric liquid crystal composition containing a chiral agent for imparting levorotation may be used.

In addition, the reflective layers 111 and 112 containing a cholesteric resin may be layers having flakes of the cholesteric resin, in the same manner as the first display layer 120 described later.

The plurality of reflective layers 111 and 112 included in the polarized light separation layer 110 usually partially or entirely overlap each other as viewed in the thickness direction thereof. That is, the position of a part or the entirety of a reflective layer 111 and the position of a part or the entirety of another reflective layer 112 are the same as each other in the in-plane direction perpendicular to the thickness direction. In the present embodiment, an example in which the entire reflective layer 111 and the entire reflective layer 112 overlap each other as viewed in the thickness direction will be described.

The thickness of the reflective layers 111 and 112 is independently preferably 2.5 µm or more, more preferably 2.75 µm or more, and particularly preferably 3 µm or more, and is preferably 10 µm or less, more preferably 7.5 µm or less, and particularly preferably 6.0 µm or less. In general, the thicker the reflective layers 111 and 112 are, the higher the degree of circular polarization of transmitted light tends to be.

The polarized light separation layer 110 may include an optional layer (not illustrated) within a range in which the advantageous effects of the present invention are not significantly impaired. Examples of the optional layers may include a support layer that supports the reflective layers 111 and 112, and an adhesive layer (including a tackiness agent layer) that bonds the reflective layers 111 and 112 to each other. These optional layers preferably have a low in-plane retardation. Specifically, the in-plane retardation of the optional layers is preferably 20 nm or less, more preferably 10 nm or less, particularly preferably 5 nm or less, and ideally 0 nm. The layer having such a low in-plane retardation is an optically isotropic layer, and thus a change in the polarization state due to the optional layer can be suppressed.

The thickness of the polarized light separation layer 110 is not particularly limited, and is preferably 10 µm or more, more preferably 30 µm or more, and particularly preferably 50 µm or more, and is preferably 1,000 µm or less, more preferably 500 µm or less, and particularly preferably 300 µm or less.

### (1.2. First display layer)

The first display layer 120 has the circularly polarized light separation function. That is, the first display layer 120 can reflect circularly polarized light having one rotation direction D_{B1} and transmit circularly polarized light having a rotation direction opposite to the rotation direction D_{B1} in a wavelength range in which the first display layer 120 can exhibit the circularly polarized light separation function. In the following description, the wavelength range in which the first display layer 120 can exhibit the circularly polarized light separation function may be referred to as a "first display wavelength range" as appropriate. Therefore, the first display layer 120 has the first display wavelength range in which the first display layer 120 can reflect circularly polarized light having the rotation direction D_{B1} and can transmit circularly polarized light having a rotation direction opposite to the rotation direction D_{B1}. The range of reflectance of the first display layer 120 with respect to unpolarized light in the first display wavelength range may be the same as the range of reflectance of the reflective layers 111 and 112 with respect to unpolarized light in the polarized light reflection wavelength range.

The rotation direction D_{B1} of circularly polarized light that can be reflected by the first display layer 120 is the same as the rotation direction D_{A} of circularly polarized light that can be reflected by the reflective layers 111 and 112 included in the polarized light separation layer 110. When light is transmitted through the polarized light separation layer 110 and enters the first display layer 120, a rotation direction D_{C} of at least a part of circularly polarized light (specifically, circularly polarized light in the polarized light reflection wavelength range) contained in the light is opposite to the rotation direction D_{B1} of circularly polarized light that can be reflected by the first display layer 120. Therefore, the first display layer 120 cannot reflect light that is transmitted through the polarized light separation layer 110 and enters the first display layer 120 or hardly reflects the light. Therefore, when reflected light observation of the surface (the second surface 110D) opposite with respect to the first display layer 120 is carried out, the visibility of the first display layer 120 can be reduced, resulting in being concealed.

From the viewpoint of achieving a display mode that allows an observer to visually recognize the layer with the naked eye, the first display wavelength range of the first display layer 120 is preferably within the visible wavelength range.

The wavelength width of the first display wavelength range of the first display layer 120 may be set according to the design of the optical layered body 100. The wavelength width of the first display wavelength range of the first display layer 120 may fall within the same range of the wavelength width of the polarized light reflection wavelength range of the reflective layers 111 and 112 included in the polarized light separation layer 110.

The first display wavelength range of the first display layer 120 usually overlaps with the polarized light reflection wavelength range of at least one of the plurality of reflective layers 111 and 112 included in the polarized light separation layer 110. A part of the first display wavelength range may overlap with a part of the polarized light reflection wavelength range. The entirety of the first display wavelength range may overlap with a part of the polarized light reflection wavelength range. A part of the first display wavelength range may overlap with the entirety of the polarized light reflection wavelength range. The entirety of the first display wavelength range may overlap with the entirety of the polarized light reflection wavelength range. In particular, it is preferable that the entirety of the first display wavelength range overlaps with a part or the entirety of the polarized light reflection wavelength range. That is, it is preferable that the first display wavelength range of the first display layer 120 is included in at least one of the polarized light reflection wavelength ranges of the plurality of reflective layers 111 and 112 contained in the polarized light separation layer 110. Therefore, it is preferable that the lower limit of the first display wavelength range is equal to or more than the lower limit of a polarized light reflection wavelength range and the upper limit of the first display wavelength range is equal to or less than the upper limit of the polarized light reflection wavelength range. In the optical layered body 100 that satisfies such a relationship, the concealability of the first display layer 120 can be effectively enhanced when reflected light observation of the surface (the second surface 110D) opposite with respect to the first display layer 120 is carried out.

The first display wavelength range of the first display layer 120 can be measured by the same manner as the method for measuring the polarized light reflection wavelength range of the reflective layers 111 and 112 contained in the polarized light separation layer 110.

The first display layer 120 includes a cholesteric resin (that is, a resin having cholesteric regularity) from the viewpoint of obtaining a circularly polarized light separation function. The first display layer 120 may be a layer made of a cholesteric resin, and is preferably a layer containing flakes of a cholesteric resin. The flake of the cholesteric resin can be used as a pigment containing a minute layer of the cholesteric resin. Therefore, the layer containing the flakes of the cholesteric resin can exhibit the circularly polarized light separation function in the same manner as the layer itself of the cholesteric resin.

The particle diameter of the flakes of the cholesteric resin is preferably 1 µm or more in order to obtain decorativeness. In particular, it is desirable that the particle diameter of the flakes is equal to or larger than the thickness of the layer containing the flakes. In this case, it is easy to orient respective flakes so that the main surface of the flakes and the layer plane of the layer containing the flake become in parallel with each other or form an acute angle. Therefore, since the flakes can effectively receive light, the circularly polarized light separation function of the layer containing the flakes can be enhanced. The upper limit of the particle diameter of the flakes is preferably 500 µm or less, and more preferably 100 µm or less, from the viewpoint of obtaining formability and printability. Herein, the particle diameter of the flake refers to a diameter of a circle having the same area as that of the flake.

As the flakes of the cholesteric resin, for example, crushed pieces of the above-described layer of the cholesteric resin may be used. Such flakes can be produced, for example, by the production method described in Japanese Patent No. 6142714.

The layer containing the flakes of the cholesteric resin may contain an optional component in combination with the above-mentioned flakes. The optional component may include a binder for binding the flakes. Examples of the binder may include polymers such as a polyester-based polymer, an acrylic-based polymer, a polystyrene-based polymer, a polyamide-based polymer, a polyurethane-based polymer, a polyolefin-based polymer, a polycarbonate-based polymer, and a polyvinyl-based polymer. The amount of the binder is preferably 20 parts by weight or more, more preferably 40 parts by weight or more, and particularly preferably 60 parts by weight or more, and is preferably 1,000 parts by weight or less, more preferably 800 parts by weight or less, and particularly preferably 600 parts by weight or less, relative to 100 parts by weight of the flakes.

The layer containing the flakes of the cholesteric resin may be produced, for example, by applying an ink containing the flakes, a solvent, and as necessary, an optional component, and drying the ink. As the solvent, an inorganic solvent such as water may be used, and an organic solvent such as a ketone solvent, an alkyl halide solvent, an amide solvent, a sulfoxide solvent, a heterocyclic compound, a hydrocarbon solvent, an ester solvent, or an ether solvent may be used. The amount of the solvent is preferably 40 parts by weight or more, more preferably 60 parts by weight or more, and particularly preferably 80 parts by weight or more, and is preferably 1,000 parts by weight or less, more preferably 800 parts by weight or less, and particularly preferably 600 parts by weight or less, relative to 100 parts by weight of the flakes.

The above-mentioned ink may contain monomers of the polymer in place of or in combination with the polymer as a binder. In this case, the layer containing the flakes of the cholesteric resin can be formed by applying and drying an ink, and then polymerizing the monomers. When containing the monomer, the ink preferably contains a polymerization initiator.

The thickness of the first display layer 120 is not particularly limited, and is preferably 2.8 µm or more, more preferably 10 µm or more, and particularly preferably 30 µm or more, and is preferably 100 µm or less, more preferably 75 µm or less, and particularly preferably 50 µm or less.

### (1.3. Visibility of first display layer)

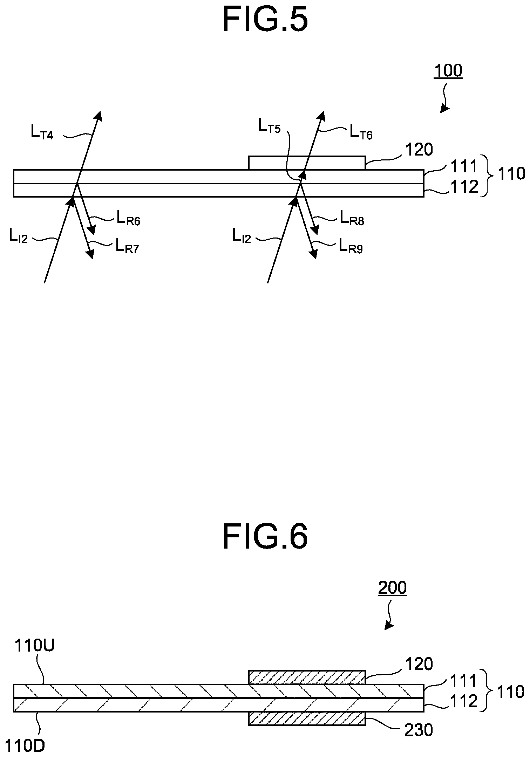

FIGs. 4 and 5 are cross-sectional views schematically illustrating the optical layered body 100 according to the first embodiment of the present invention. FIGs. 4 and 5 schematically illustrate paths of light reflected by the reflective layers 111 and 112 and the first display layer 120. Although an actual optical layered body 100 may cause various absorptions and reflections other than those described later, the main paths of light will be schematically described in the following description for convenience of description of actions.

FIG. 4 shows a case where the first display layer 120 side of the optical layered body 100 is irradiated with illumination light L_{I1} such as unpolarized light containing both clockwise circularly polarized light and counterclockwise circularly polarized light. As shown in FIG. 4, at an area where the first display layer 120 is not disposed, the illumination light L_{I1} enters the reflective layers 111 and 112 included in the polarized light separation layer 110. A part of the illumination light L_{I1} is reflected by the reflective layers 111 and 112 as circularly polarized lights L_{R1} and L_{R2} having the rotation direction D_{A}. Light L_{T1} other than the reflected circularly polarized lights L_{R1} and L_{R2} is transmitted through the polarized light separation layer 110 and goes out of the optical layered body 100.

As shown in FIG. 4, at an area where the first display layer 120 is disposed, the first display layer 120 and the polarized light separation layer 110 are arranged in this order, and the illumination light L_{I1} thus enters the first display layer 120. A part of circularly polarized light contained in the illumination light L_{I1} is reflected by the first display layer 120 as circularly polarized light L_{R3} having the rotation direction D_{B1}. Light L_{T2} other than the reflected circularly polarized light L_{R3} enters the polarized light separation layer 110. A part of the entering light L_{I2} can be reflected by the reflective layers 111 and 112 as circularly polarized lights L_{R4} and L_{R5} having the rotation direction D_{A}. Light L_{T3} other than the reflected circularly polarized lights L_{R3}, L_{R4}, and L_{R5} is transmitted through the polarized light separation layer 110 and goes out of the optical layered body 100.

Thus, when the first display layer 120 side of the optical layered body 100 is irradiated with the illumination light L_{I1} including both clockwise circularly polarized light and counterclockwise circularly polarized light, the circularly polarized light L_{R3} can be reflected by the first display layer 120. When reflected light observation of the first display layer 120 side is carried out under irradiation with the illumination light L_{I1}, light with strong intensity is reflected by the first display layer 120. Thus an observer can visually recognize the circularly polarized light L_{R3} that has been reflected by the first display layer 120. Therefore, the first display layer 120 can be visually recognized by the observer who performs reflected light observation of the first display layer 120 side of the optical layered body 100 under illumination light containing both clockwise circularly polarized light and counterclockwise circularly polarized light.

FIG. 5 shows a case where a side of the optical layered body 100 opposite with respect to the first display layer 120 is irradiated with illumination light L_{I2} such as unpolarized light containing both clockwise circularly polarized light and counterclockwise circularly polarized light. As shown in FIG. 5, at the area where the first display layer 120 is not disposed, the illumination light L_{I2} enters the reflective layers 111 and 112 included in the polarized light separation layer 110. A part of the illumination light L_{I2} is reflected by the reflective layers 111 and 112 as circularly polarized lights L_{R6} and L_{R7} having the rotation direction D_{A}. Light L_{T4} other than the reflected circularly polarized lights L_{R6} and L_{R7} is transmitted through the polarized light separation layer 110 and goes out of the optical layered body 100.

As shown in FIG. 5, at the area where the first display layer 120 is disposed, in the same manner as the area where the first display layer 120 is not disposed, a part of the illumination light L_{I2} is reflected by the reflective layers 111 and 112 in the polarized light separation layer 110 as circularly polarized lights L_{R8} and L_{R9} having the rotation direction D_{A} and light L_{T5} other than the reflected circularly polarized lights L_{R8} and L_{R9} is transmitted through the polarized light separation layer 110. The light L_{T5} that has been transmitted through the polarized light separation layer 110 then enters the first display layer 120. However, the rotation direction of a part or the entirety of circularly polarized light contained in the light L_{T5} that has been transmitted through the polarized light separation layer 110 is opposite to the rotation direction D_{A} of the circularly polarized lights L_{R8} and L_{R9} reflected by the reflective layers 111 and 112. Herein, the rotation direction D_{B1} of circularly polarized light that can be reflected by the first display layer 120 is the same as the rotation direction D_{A} of the circularly polarized lights L_{R8} and L_{R9} reflected by the reflective layers 111 and 112. Therefore, the light L_{T5} that enters the first display layer 120 includes none or just a small quantity of circularly polarized light having the rotation direction D_{B1} that the first display layer 120 can reflect. Accordingly, the entirety or the most of the light L_{T5} is not reflected by the first display layer 120. Thus, light L_{T6}, which is the entirety or most of the light L_{T5}, is transmitted through the first display layer 120, and then goes out of the optical layered body 100.

Thus, when the side of the optical layered body 100 opposite with respect to the first display layer 120 is irradiated with the illumination light L_{T2} including both clockwise circularly polarized light and counterclockwise circularly polarized light, the light reflection does not occur or occurs only slightly on the first display layer 120. When reflected light observation of the side opposite with respect to the first display layer 120 is carried out under irradiation with the illumination light L_{I2}, the observer cannot visually recognize light reflected by the first display layer 120. Therefore, the first display layer 120 cannot be visually recognized by the observer who performs reflected light observation of the side of the optical layered body 100 opposite with respect to the first display layer 120 under illumination light containing both clockwise circularly polarized light and counterclockwise circularly polarized light.

When the first display layer 120 side of the optical layered body 100 is irradiated or the side of the optical layered body 100 opposite with respect to the first display layer 120 is irradiated as described above, light can be partially transmitted through the optical layered body 100. Therefore, the optical layered body 100 can be visually recognized to be a transparent or translucent member. Accordingly, another member can be usually observed through the optical layered body 100. The transparency of the optical layered body 100 is preferably a degree in which, through the optical layered body 100 that is placed on a plane on which a character or a picture is printed, the character or picture printed on the plane can be visually recognizable. When the optical layered body 100 is transparent or translucent, the transmittance of unpolarized light entering the optical layered body 100 may be preferably 20% or more, and more preferably 40% or more. The upper limit of the transmittance is not limited, and for example, may be 90% or less.

Therefore, although the optical layered body 100 is transparent or translucent, the first display layer 120 can be visually recognized when reflected light observation of the first display layer side is carried out, but the first display layer 120 cannot be visually recognized when reflected light observation of the side opposite with respect to the first display layer 120 is carried out. Although the optical layered body 100 is transparent or translucent, the optical layered body 100 can thus achieve a specific display mode in which an image of the optical layered body visually recognized when observed from a front surface differs from an image of the optical layered body visually recognized when observed from a rear surface.

In the present embodiment, the polarized light separation layer 110 includes the plurality of reflective layers 111 and 112. Therefore, when the side of the optical layered body 100 opposite with respect to the first display layer 120 is irradiated with the illumination light L_{I2}, the reflection of light by the first display layer 120 can be effectively suppressed. In particular, the plurality of reflective layers 111 and 112 reflect much circularly polarized light having the rotation direction D_{A} that is the same as the rotation direction D_{B1}, and therefore the intensity of circularly polarized light having the rotation direction D_{B1} that reaches the first display layer 120 can be effectively reduced. Even when the circularly polarized light having the rotation direction D_{B1} is reflected by the first display layer 120, the reflected circularly polarized light is further reflected by the plurality of reflective layers 111 and 112. Therefore, transmission of the reflected light by the first display layer 120 through the polarized light separation layer 110 can be effectively suppressed. Accordingly, when reflected light observation of the side of the optical layered body 100 opposite with respect to the first display layer 120 is carried out under irradiation with the illumination light L_{T2}, the concealability of the first display layer 120 can be enhanced. Since the concealability of the first display layer 120 is high, a difference between the image of the optical layered body visually recognized when observed from the front surface and the image of the optical layered body visually recognized when observed from the rear surface can be obvious, and determination of authenticity as described below can be easily performed.

When the polarized light reflection wavelength range of each of the reflective layers 111 and 112 included in the polarized light separation layer 110 is controlled in the optical layered body 100, the color of circularly polarized light reflected by the reflective layers 111 and 112 can be controlled, so that the color of the polarized light separation layer 110 can be controlled. Therefore, according to the optical layered body 100, the latitude of color of the polarized light separation layer 110 is increased, and various designs can be achieved.

When the optical layered body 100 is set in a direction in which the first display layer 120 and the polarized light separation layer 110 are arranged in this order from the observer side, the observer can usually see the first display layer 120 side of the optical layered body 100. When the optical layered body 100 is set in a direction in which the first display layer 120 and the polarized light separation layer 110 are arranged in this order from a side opposite with respect to the observer side, the observer can usually see the side of the optical layered body 100 opposite with respect to the first display layer 120. In the optical layered body 100 described above, an image in a direction in which the observer can see the first display layer 120 side can be visually recognized to be different from an image in a direction in which the observer can see the side opposite with respect to the first display layer 120 as described above. By using a difference between images visually recognized according to the directions of the optical layered body 100, a novel display mode that has not been conventionally achieved can be achieved, and a complex design with an increased latitude can be created. Although the optical layered body 100 is transparent or translucent, a difference between images is made according to the directions of the optical layered body 100 in an environment under illumination light containing both of clockwise circularly polarized light and counterclockwise circularly polarized light as described above. This difference can achieve unexpected display for an ordinary observer, and therefore giving a great impact to the observer can be expected.

### (1.4. Method for determining authenticity)

The optical layered body 100 described above can be used for determination of authenticity using circularly polarized light. For example, the first display layer 120 can be visually recognized in observation through one of a clockwise circularly polarizing plate and a counterclockwise circularly polarizing plate, but the first display layer 120 cannot be visually recognized in observation through the other of the clockwise circularly polarizing plate and the counterclockwise circularly polarizing plate. Therefore, the authenticity of the optical layered body 100 can be determined by observation using a viewer including the clockwise circularly polarizing plate and the counterclockwise circularly polarizing plate.

However, it is often difficult for ordinary users to acquire the viewer. Therefore, it is difficult for the ordinary users to determine authenticity, and the determination of authenticity is performed only by users such as an original manufacturer, a certain retail store, and a public institution. Thus, it is preferable that the determination of authenticity of the optical layered body 100 is performed without using the viewer.

For example, the authenticity of the optical layered body 100 may be determined by a determination method including:
a first step of observing, from the first display layer 120 side, reflected light of light for illuminating the first display layer 120 side of the optical layered body 100 to determine whether the first display layer 120 can be visually recognized; and
a second step of observing, from the side opposite with respect to the first display layer 120, reflected light of light for illuminating the side of the optical layered body 100 opposite with respect to the first display layer 120 to determine whether the first display layer 120 can be visually recognized.

In the first step of the above-mentioned determination method, the first display layer 120 side of the optical layered body 100 is irradiated with light containing clockwise circularly polarized light and counterclockwise circularly polarized light. The optical layered body 100 is then observed from the first display layer 120 side to determine whether the first display layer 120 can be visually recognized. When the optical layered body 100 is authentic, the first display layer 120 can be visually recognized.

In the second step of the above-mentioned determination method, the side of the optical layered body 100 opposite with respect to the first display layer 120 is irradiated with light containing clockwise circularly polarized light and counterclockwise circularly polarized light. The optical layered body 100 is then observed from the side opposite with respect to the first display layer 120 to determine whether the first display layer 120 can be visually recognized. When the optical layered body 100 is authentic, the first display layer 120 cannot be visually recognized.

Therefore, in a case where the first display layer 120 can be visually recognized in the first step and the first display layer 120 cannot be visually recognized in the second step, the optical layered body 100 can be determined to be authentic. In other cases, the optical layered body 100 can be determined to be inauthentic. As described above, the simple method without using a viewer can determine the authenticity of the optical layered body 100 according to the embodiment described above.

### [2. Second embodiment of optical layered body]

FIG. 6 is a cross-sectional view schematically illustrating an optical layered body 200 according to a second embodiment of the present invention.

As shown in FIG. 6, the optical layered body 200 according to the second embodiment of the present invention is configured in the same manner as the optical layered body 100 according to the first embodiment, except that the optical layered body 200 further includes a second display layer 230 in combination with the polarized light separation layer 110 and the first display layer 120. Therefore, the polarized light separation layer 110 and the first display layer 120 included in the optical layered body 200 may be the same as those included in the optical layered body 100 according to the first embodiment, and thus the same advantageous effects as those described in the first embodiment can be obtained.

### (2.1. Second display layer)

The second display layer 230 is disposed directly or indirectly on the surface of the polarized light separation layer 110 opposite with respect to the first display layer 120. In the present embodiment, an example in which the second display layer 230 is disposed on the second surface 110D of the polarized light separation layer 110 will be described. Accordingly, the optical layered body 200 includes the second display layer 230, the polarized light separation layer 110, and the first display layer 120 in this order in the thickness direction.

The second display layer 230 may be disposed in the same manner as the first display layer 120, except that it is disposed on the surface of the polarized light separation layer 110 opposite with respect to the first display layer 120. With the second display layer 230 configured like this, the same advantages as those of the first display layer 120 can be obtained.

Therefore, the second display layer 230 may be disposed on a part of the second surface 110D of the polarized light separation layer 110, or on the entire second surface 110D. The second display layer 230 is generally disposed so as to overlap with the reflective layers 111 and 112 of the polarized light separation layer 110 as viewed in the thickness direction. In the present embodiment, the entire second display layer 230 overlaps with a part of the reflective layers 111 and 112 of the polarized light separation layer 110 as viewed in the thickness direction. The second display layer 230 may generally have a planar shape according to the design of the optical layered body 200. The factors such as the size, shape, position, and number of the second display layer 230 may be different from those of the first display layer 120.

The second display layer 230 has a circularly polarized light separation function. That is, the second display layer 230 can reflect circularly polarized light having one rotation direction D_{B2} and transmit circularly polarized light having a rotation direction opposite to the rotation direction D_{B2}, in the wavelength range in which the second display layer 230 can exhibit the circularly polarized light separation function. In the following description, the wavelength range in which the second display layer 230 can exhibit the circularly polarized light separation function as described above may be referred to as a "second display wavelength range" as appropriate. Thus, the second display layer 230 has a second display wavelength range in which the second display layer 230 can reflect circularly polarized light having one rotation direction D_{B2} and transmit circularly polarized light having a rotation direction opposite to the rotation direction D_{B2}. The range of the reflectance of the second display layer 230 with respect to unpolarized light in the second display wavelength range may be the same as the range of the reflectance of the reflective layers 111 and 112 with respect to unpolarized light in the polarized light reflection wavelength range described in the first embodiment.

The rotation direction D_{B2} of the circularly polarized light that can be reflected by the second display layer 230 may be the same as the rotation direction D_{A} of the circularly polarized light that can be reflected by the reflective layers 111 and 112 included in the polarized light separation layer 110 and the rotation direction D_{B1} of the circularly polarized light that can be reflected by the first display layer 120. Therefore, when light is transmitted through the polarized light separation layer 110 and enters the second display layer 230, the rotation direction D_{C} of at least a part of the circularly polarized light (specifically, the circularly polarized light in the polarized light reflection wavelength range) contained in the light and the rotation direction D_{B2} of the circularly polarized light that can be reflected by the second display layer 230 are opposite to each other. Therefore, the second display layer 230 cannot reflect or hardly reflects the light that has been transmitted through the polarized light separation layer 110 and entering the second display layer 230. Therefore, when reflected light observation of the surface (the first surface 110U) opposite with respect to the second display layer 230 is carried out, the visibility of the second display layer 230 can be reduced, resulting in being concealed.

The second display wavelength range of the second display layer 230 may be the same as the first display wavelength range of the first display layer 120. Therefore, the second display wavelength range is preferably within the visible wavelength range. The wavelength width of the second display wavelength range may be within the same range as that for the wavelength width of the polarized light reflection wavelength range of the reflective layers 111 and 112 included in the polarized light separation layer 110. Furthermore, the second display wavelength range generally overlaps with at least one of the polarized light reflection wavelength ranges of the plurality of reflective layers 111 and 112 included in the polarized light separation layer 110, and in particular, it is preferable that the entirety of the second display wavelength range overlaps with a part or the entirety of the polarized light reflection wavelength range. That is, it is preferable that the second display wavelength range of the second display layer 230 is included in at least one of the polarized light reflection wavelength ranges of the plurality of reflective layers 111 and 112 included in the polarized light separation layer 110.

Such a second display layer 230 generally includes a cholesteric resin from the viewpoint of obtaining a circularly polarized light separation function. The second display layer 230 can be formed in the same manner as that for the first display layer 120 described in the first embodiment, and therefore, the second display layer 230 may be a layer made of a cholesteric resin, and is preferably a layer containing flakes of a cholesteric resin. When the layer containing the flakes of the cholesteric resin is used as the second display layer 230, the same advantages as those of the first display layer 120 can be obtained.

### (2.2. Visibility of first display layer and second display layer)

Under illumination light containing both clockwise circularly polarized light and counterclockwise circularly polarized light, the first display layer 120 of the optical layered body 200 according to the second embodiment can be visually recognized by an observer who observes the optical layered body 200 from the first display layer 120 side of the optical layered body 200, but cannot be visually recognized by an observer who observes the optical layered body 200 from the side of the optical layered body 200 opposite with respect to the first display layer 120, by the same mechanism as that described in the first embodiment.

On the other hand, under illumination light containing both clockwise circularly polarized light and counterclockwise circularly polarized light, the second display layer 230 of the optical layered body 200 can be visually recognized by an observer who observes the optical layered body 200 from the second display layer 230 side of the optical layered body 200, but cannot be visually recognized by an observer who observes the optical layered body 200 from the side of the optical layered body 200 opposite with respect to the second display layer 230, by the same mechanism as that for the first display layer 120.

In the same manner as the optical layered body 100 according to the first embodiment, the optical layered body 200 can be visually recognized to be a transparent or translucent member. Accordingly, another member can be usually observed through the optical layered body 200.

Therefore, although the optical layered body 200 is transparent or translucent, when reflected light observation of the first display layer side is carried out, the first display layer 120 can be visually recognized and the second display layer 230 cannot be visually recognized. When reflected light observation of the second display layer side is carried out, the first display layer 120 cannot be visually recognized and the second display layer 230 can be visually recognized. Although the optical layered body 200 is transparent or translucent, the optical layered body 200 can thus achieve a specific display mode in which an image of the optical layered body visually recognized when observed from a front surface differs from an image of the optical layered body visually recognized when observed from a rear surface.

Since the polarized light separation layer 110 in the optical layered body 200 according to the present embodiment includes the plurality of reflective layers 111 and 112 as in the optical layered body 100 according to the first embodiment, the concealability of the first display layer 120 and the second display layer 230 can be improved. That is, when reflected light observation of the side of the optical layered body 200 opposite with respect to the first display layer 120 is carried out under irradiation with illumination light, the concealability of the first display layer 120 can be enhanced. In addition, when reflected light observation of the side of the optical layered body 200 opposite with respect to the second display layer 230 is carried out under irradiation with illumination light, the concealability of the second display layer 230 can be enhanced. Furthermore, according to the optical layered body 200 of the present embodiment, the same advantages as those of the optical layered body 100 described in the first embodiment can be obtained.

### (2.3. Method for determining authenticity)

The optical layered body 200 according to the second embodiment can be used for determination of authenticity using circularly polarized light, in the same manner as the optical layered body 100 according to the first embodiment.

For example, the authenticity of the optical layered body 200 may be determined by a determination method including:
a third step of observing, from the first display layer 120 side, reflected light of light for illuminating the first display layer 120 side of the optical layered body 200 to determine whether the first display layer 120 and the second display layer 230 can be visually recognized; and
a fourth step of observing, from the side opposite with respect to the first display layer 120, reflected light of light for illuminating the side of the optical layered body 200 opposite with respect to the first display layer 120 to determine whether the first display layer 120 and the second display layer 230 can be visually recognized.

In the third step of the above-mentioned determination method, the first display layer 120 side of the optical layered body 200 is irradiated with light containing clockwise circularly polarized light and counterclockwise circularly polarized light. The optical layered body 200 is then observed from the first display layer 120 side to determine whether the first display layer 120 and the second display layer 230 can be visually recognized. When the optical layered body 200 is authentic, the first display layer 120 can be visually recognized, but the second display layer 230 cannot be visually recognized.

In the fourth step of the above-mentioned determination method, the side of the optical layered body 200 opposite with respect to the first display layer 120 is irradiated with light containing clockwise circularly polarized light and counterclockwise circularly polarized light. The optical layered body 200 is then observed from the side opposite with respect to the first display layer 120 to determine whether the first display layer 120 and the second display layer 230 can be visually recognized. When the optical layered body 200 is authentic, the first display layer 120 cannot be visually recognized, but the second display layer 230 can be visually recognized.

Therefore, in a case where the first display layer 120 can be visually recognized and the second display layer 230 cannot be visually recognized in the third step, and the first display layer 120 cannot be visually recognized and the second display layer 230 can be visually recognized in the fourth step, the optical layered body 200 can be determined to be authentic. In other cases, the optical layered body 200 can be determined to be inauthentic. As described above, the simple method without using a viewer can determine the authenticity of the optical layered body 200 according to the aforementioned embodiment, in the same manner as the optical layered body 100 according to the first embodiment.

### [3. Modified Examples of optical layered body]

The optical layered body is not limited to those described in the first to second embodiments. For example, the optical layered body may further include an optional element in combination with the polarized light separation layer 110, the first display layer 120, and the second display layer 230 described above.

For example, in addition to the first display layer 120 and the second display layer 230, the optical layered body may include an optional layer having a circularly polarized light separation function on the first surface 110U and the second surface 110D of the polarized light separation layer 110. As a specific example, one or both of the first surface 110U and the second surface 110D of the polarized light separation layer 110 may be provided with an optional third display layer capable of reflecting circularly polarized light having a rotation direction D_{D} opposite to the rotation direction D_{A} of circularly polarized light that can be reflected by the reflective layers 111 and 112 included in the polarized light separation layer 110 and of transmitting circularly polarized light having a rotation direction opposite to the rotation direction D_{D}. The optional third display layer may be formed, for example, as a layer of cholesteric resin, a layer containing flakes of cholesteric resin, or the like. In general, the optional third display layer can be visually recognized by both an observer who observes the optical layered body from the first display layer 120 side and an observer who observes the optical layered body from the side opposite with respect to the first display layer 120 under illumination light containing both clockwise circularly polarized light and counterclockwise circularly polarized light.

The optical layered body may also include, for example, an optional non-chiral layer containing colorants such as a pigment and a dye that do not have a circularly polarized light separation function. The non-chiral layer may be disposed on the first surface 110U of the polarized light separation layer 110 or on the second surface 110D thereof. In general, this non-chiral layer can be visually recognized by both an observer who observes the optical layered body from the first display layer 120 side and an observer who observes the optical layered body from the side opposite with respect to the first display layer 120 under illumination light containing both clockwise circularly polarized light and counterclockwise circularly polarized light.

Furthermore, the optical layered body may include, for example, an adhesive layer for bonding the above-described layers to each other. Specific examples of the adhesive layer included in the optical layered body may include an adhesive layer between the polarized light separation layer 110 and the first display layer 120, and an adhesive layer between the polarized light separation layer 110 and the second display layer 230. The adhesive layer preferably has a low in-plane retardation as in the optional layer that may be included in the polarized light separation layer 110.

Furthermore, for example, the optical layered body may include a cover layer that protects each of the above-described layers. These cover layers are preferably disposed on the outside of the layers described above. As a specific example, the optical layered body may include a cover layer, a second display layer, a polarized light separation layer, a first display layer, and a cover layer in this order in the thickness direction. Such a cover layer may be formed of a transparent material, for example, a resin.

Furthermore, for example, the optical layered body may include an optional layer which has a low in-plane retardation and is disposed between the above-described respective layers, and an optional layer which has a low in-plane retardation and serves as the outermost layer of the optical layered body, as long as the advantageous effects of the present invention are not significantly impaired. An optional layer having such a low in-plane retardation may be hereinafter referred to as a "low Re layer". The specific in-plane retardation of such a low Re layer is usually 0 nm or more and 5 nm or less. Examples of the position where the low Re layer is disposed may include, but are not limited to, a position on a side of the first display layer opposite with respect to the polarized light separation layer, a position between the first display layer and the polarized light separation layer, a position between the polarized light separation layer and the second display layer, and a position on a side of the second display layer opposite with respect to the polarized light separation layer. The low Re layer preferably has a high light transmittance, and the total light transmittance of the low Re layer is preferably 80% or more, and more preferably 85% or more. Examples of the material for such a low Re layer may include a hard polyvinyl chloride, a soft polyvinyl chloride, an acrylic resin, glass, a polycarbonate (PC), and a polyethylene terephthalate (PET). The specific material may be appropriately selected depending on the application, desired texture, durability, and mechanical strength of the optical layered body.

### [4. Article including optical layered body]

The above-described optical layered body may be used alone, or may be used as an article in combination with another member. Examples of an article including the optical layered body may include an article including a body member and the optical layered body provided on the body member.

The range of the body member is not restricted. Examples of the body member may include, but are not limited to, textile products such as clothes; leather products such as a bag and a shoe; metal products such as a screw; paper products such as a booklet, a price tag, and packing sheet; plastic products such as a card and a polymer banknote; and rubber products such as a tire. Hereinafter, a booklet (for example, a passport) as an article according to a third embodiment of the present invention as an example will be described.

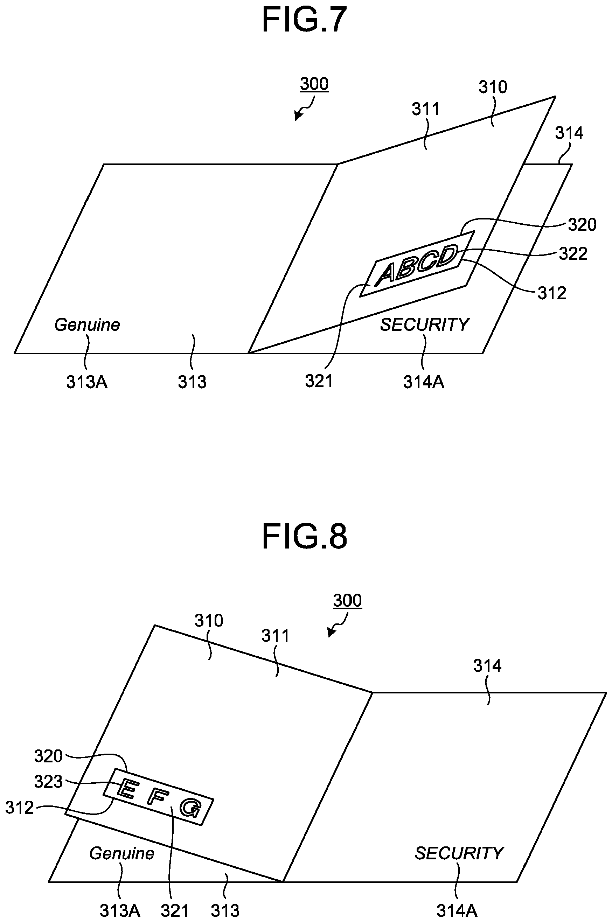

FIGs. 7 and 8 are perspective views schematically illustrating a booklet 300 as an article according to the third embodiment of the present invention.

As shown in FIGs. 7 and 8, the booklet 300 as the article according to the third embodiment of the present invention includes a booklet body 310 as the body member and an optical layered body 320. Specifically, a part of "n"th leaf 311 of the booklet body 310 has an opening 312 passing through the "n"th leaf 311, and the optical layered body 320 is provided in the opening 312. Herein, "n" is an integer of 2 or more.

Character information "Genuine" is printed at an area 313A on which the optical layered body 320 is to be overlaid, on a "n-1"th leaf 313 of the booklet body 310. Character information "SECURITY" is printed at an area 314A on which the optical layered body 320 is to be overlaid, on a "n+1"th leaf 314 of the booklet.

In the present embodiment, the optical layered body 320 is a sheet including a polarized light separation layer 321, a first display layer 322 disposed on one surface of the polarized light separation layer 321, and a second display layer 323 disposed on another surface of the polarized light separation layer 321. The first display layer 322 has a planer shape with character string "ABCD", and is formed on a side facing the "n-1"th leaf 313. The second display layer 323 has a planer shape with character string "EFG", and is formed on a side facing the "n+1"th leaf 314.

When the "n"th leaf 311 of the booklet 300 is overlaid on the "n+1"th leaf 314 and observed under irradiation with illumination light containing clockwise circularly polarized light and counterclockwise circularly polarized light, the observer can visually recognize light reflected by the first display layer 322 of the optical layered body 320, but cannot visually recognize light reflected by the second display layer 323. Since the optical layered body 320 is transparent or translucent, illumination light is transmitted through the optical layered body 320, enters the "n+1"th leaf 314, is reflected, is transmitted through the optical layered body 320 again, and can be visually recognized by the observer. Therefore, the observer can visually recognize the character string "ABCD" displayed in the first display layer 322, cannot visually recognize the character string "EFG" displayed in the second display layer 323, and can visually recognize the character information "SECURITY" printed on the leaf 314 through the optical layered body 320.

When the "n"th leaf 311 of the booklet 300 is overlaid on the "n-1"th leaf 313 and observed under irradiation with illumination light containing clockwise circularly polarized light and counterclockwise circularly polarized light, the observer cannot visually recognize light reflected by the first display layer 322 of the optical layered body 320, but can visually recognize light reflected by the second display layer 323. Since the optical layered body 320 is transparent or translucent, illumination light is transmitted through the optical layered body 320, enters the "n-1"th leaf 313, is reflected, is transmitted through the optical layered body 320 again, and can be visually recognized by the observer. Therefore, the observer cannot visually recognize the character string "ABCD" displayed in the first display layer 322, can visually recognize the character string "EFG" displayed in the second display layer 323, and can visually recognize the character information "Genuine" printed on the leaf 313 through the optical layered body 320.

Accordingly, the authenticity of the booklet 300 can be identified and determined using the optical layered body 320, and therefore difficultly in counterfeiting of the booklet 300 can be enhanced. According to the optical layered body 320, a novel display mode that has not been conventionally achieved can be achieved, and giving a great impact to the observer can be expected.

### <Example>

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure (23°C and 1 atm) unless otherwise specified.

In the following description, as the tackiness agent, a transparent tackiness tape "LUCIACS CS9621T" (thickness: 25 µm, visible light transmittance: 90% or more, in-plane retardation Re: 3 nm or less) manufactured by Nitto Denko Corporation was used, unless otherwise specified.

### <Method for measuring reflectance of cholesteric resin layer>

The reflectance when unpolarized light (wavelength: 400 nm to 780 nm) entered a cholesteric resin layer was measured with an ultraviolet-visible spectrophotometer (UV-Vis 550, manufactured by JASCO Corporation).

### <Method for measuring degree of circular polarization of transmitted light of layer>

The degree of polarization of a layer to be measured at a measurement wavelength range of 400 nm to 780 nm was measured with a polarimeter ("AxoScan high-speed high-precision Mueller matrix polarimeter" manufactured by Axometrics, Inc.). The measurement was performed in the thickness direction (incidence angle: 0°) of the layer, and a value output as measurement item "TOTAL POLARIZANCE" of the polarimeter was read to obtain the degree of polarization at each wavelength in the above-mentioned measurement wavelength range.

From the obtained data of degree of polarization, the maximum degree of polarization in the measurement wavelength range was obtained. Wavelengths λa and λb at which a degree of polarization that was a half of the above-mentioned maximum degree of polarization was detected were identified (λa < λb). An average of the degree of polarization in a wavelength range ranging from the wavelength λa to the wavelength λb was calculated. The average value was obtained as the degree of circular polarization of transmitted light of the layer.

### <Production Example 1: Production of green cholesteric resin layer (G1)>

21.8 parts of a photopolymerizable liquid crystal compound represented by the following formula (X1); 5.46 parts of a photopolymerizable non-liquid crystal compound represented by the following formula (X2); 1.755 parts of a polymerizable chiral agent ("LC756" manufactured by BASF); 0.9 part of a photopolymerization initiator ("Irgacure OXEO2" manufactured by Ciba Japan Co., Ltd.); 0.03 part of a surfactant ("Ftergent 209F" manufactured by Neos Co., Ltd.); and 70 parts of cyclopentanone as a solvent were mixed together to produce a cholesteric liquid crystal composition in liquid state.

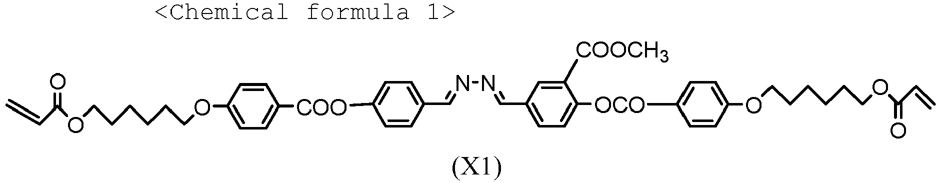

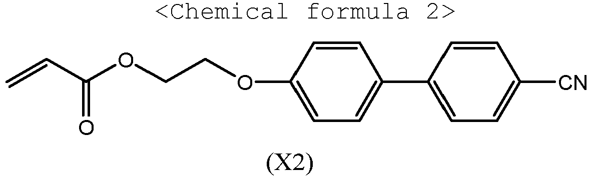

As a support, a long-length polyethylene terephthalate film having isotropy in terms of in-plane refractive index ("PET film A4100" having a thickness of 100 µm manufactured by Toyobo Co., Ltd., which will be referred to as a "PET film" hereinafter) was prepared. The PET film was attached to a feeding unit of a film conveying device, and the following operation was performed while the PET film was being conveyed in a long-length direction. First, a rubbing treatment was performed in the long-length direction parallel to a conveying direction. Subsequently, onto the surface subjected to the rubbing treatment, the prepared cholesteric liquid crystal composition was applied with a die coater. As a result, an uncured film of the cholesteric liquid crystal composition was formed on one surface of the PET film. The film of the cholesteric liquid crystal composition was then subjected to an orientation treatment for 4 minutes at 120°C.

The resulting film of the cholesteric liquid crystal composition was irradiated with ultraviolet rays at 800 mJ/cm² to cure the film. As a result, a green cholesteric resin layer (G1) with a thickness of 3.0 µm was formed on one surface of the long-length PET film.

A reflectance of the obtained cholesteric resin layer (G1) was measured by the above-described method, and the obtained cholesteric resin layer (G1) was found to have a wavelength range in which the reflectance with respect to unpolarized light is 40% or more within a wavelength range of 510 nm to 585 nm. When examined using a circularly polarizing plate, the cholesteric resin layer (G1) reflected clockwise circularly polarized light and transmitted counterclockwise circularly polarized light.

A part of the cholesteric resin layer (G1) was peeled off from the PET film and measured the degree of circular polarization of transmitted light by the above-described method. The degree of circular polarization of transmitted light was found to be 0.832.

### <Production Example 2: Production of blue cholesteric resin layer (B1)>

A blue cholesteric resin layer (B1) with a thickness of 3.0 µm was formed on one surface of a long-length PET film by the same method as that of Production Example 1, except that the amount of the liquid crystal compound represented by the formula (X1) was changed to 21.50 parts, the amount of the non-liquid crystal compound represented by the formula (X2) was changed to 5.38 parts, and the amount of the chiral agent ("LC756" manufactured by BASF) was changed to 2.13 parts.

A reflectance of the obtained cholesteric resin layer (B1) was measured by the above-described method, and the obtained cholesteric resin layer (B1) was found to have a wavelength range in which the reflectance with respect to unpolarized light is 40% or more within a wavelength range of 415 nm to 485 nm. When examined using a circularly polarizing plate, the cholesteric resin layer (B1) reflected clockwise circularly polarized light and transmitted counterclockwise circularly polarized light.

A part of the cholesteric resin layer (B1) was peeled off from the PET film and measured the degree of circular polarization of transmitted light by the above-described method. The degree of circular polarization of transmitted light was found to be 0.843.

### <Production Example 3: Production of red cholesteric resin layer (R1)>

A red cholesteric resin layer (R1) with a thickness of 3.0 µm was formed on one surface of a long-length PET film by the same method as that of Production Example 1, except that the amount of the liquid crystal compound represented by the formula (X1) was changed to 22.0 parts, the amount of the non-liquid crystal compound represented by the formula (X2) was changed to 5.51 parts, and the amount of the chiral agent ("LC756" manufactured by BASF) was changed to 1.49 parts.

A reflectance of the obtained cholesteric resin layer (R1) was measured by the above-described method, and the obtained cholesteric resin layer (R1) was found to have a wavelength range in which the reflectance with respect to unpolarized light is 40% or more within a wavelength range of 590 nm to 675 nm. When examined using a circularly polarizing plate, the cholesteric resin layer (R1) reflected clockwise circularly polarized light and transmitted counterclockwise circularly polarized light.

A part of the cholesteric resin layer (R1) was peeled off from the PET film and measured the degree of circular polarization of transmitted light by the above-described method. The degree of circular polarization of transmitted light was found to be 0.807.

### <Production Example 4: Production of ink composition (G1i) containing green cholesteric pigment (G1f) >

The cholesteric resin layer (G1) produced in Production Example 1 was peeled off from the PET film, pulverized, and classified to obtain a flake-shaped cholesteric pigment (G1f) with an average particle diameter of 50 µm. The pulverization method adopted was the same method as the examples of the International Publication No. 2020/004155. 15 parts by weight of the obtained cholesteric pigment (G1f), 100 parts by weight of a screen ink ("No.2500 Medium" manufactured by Jujo Chemical Co., Ltd.) as a binder solution, and 10 parts by weight of a dedicated dilution agent (Tetron standard solvent) for the screen ink were mixed to produce an ink composition (G1i).

### <Production Example 5: Production of ink composition (R1i) containing red cholesteric pigment (R1f)>

The cholesteric resin layer (R1) produced in Production Example 3 was peeled off from the PET film, pulverized, and classified to obtain a flake-shaped cholesteric pigment (R1f) with an average particle diameter of 50 µm. The pulverization method adopted was the same method as the examples of the International Publication No. 2020/004155. 15 parts by weight of the obtained cholesteric pigment (R1f), 100 parts by weight of a screen ink ("No.2500 Medium" manufactured by Jujo Chemical Co., Ltd.) as a binder solution, and 10 parts by weight of a dedicated dilution agent (Tetron standard solvent) for the screen ink were mixed to produce an ink composition (R1i).

### <Production Example 6: Production of ink composition (G2i) containing green cholesteric pigment (G2f) >

27.9 parts of a photopolymerizable liquid crystal compound represented by the following formula (X3); 1.88 parts of a polymerizable chiral agent ("LC756" manufactured by BASF); 0.9 part of a photopolymerization initiator ("Irgacure OXEO2" manufactured by Ciba Japan Co., Ltd.); 0.03 part of a surfactant ("Ftergent 209F" manufactured by Neos Co., Ltd.); and 70 parts of cyclopentanone as a solvent were mixed together to produce cholesteric liquid crystal composition in liquid state. This cholesteric liquid crystal composition was applied onto a rubbing-treated surface of PET film as the support same as that used in Production Example 1, was oriented and dried in an oven for 2 minutes at 100°C, and was irradiated with ultraviolet rays at 800 mJ/cm² to cure the cholesteric liquid crystal composition. As a result, a green cholesteric resin layer (G2) with a thickness of 4.1 µm was formed on one surface of the long-length PET film.

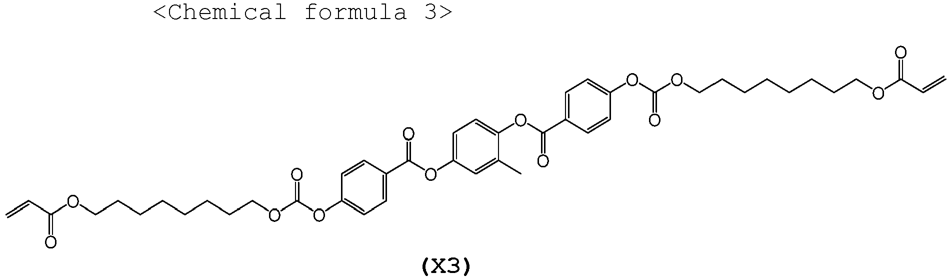

A reflectance of the obtained cholesteric resin layer (G2) was measured by the above-described method, and the obtained cholesteric resin layer (G2) was found to have a wavelength range in which the reflectance with respect to unpolarized light is 40% or more within a wavelength range of 530 nm to 575 nm. When examined using a circularly polarizing plate, the cholesteric resin layer (G2) reflected clockwise circularly polarized light and transmitted counterclockwise circularly polarized light.

The cholesteric resin layer (G2) was peeled off from the PET film, pulverized, and classified to obtain a flake-shaped cholesteric pigment (G2f) with an average particle diameter of 50 µm. The pulverization method adopted was the same method as the examples of the International Publication No. 2020/004155. 15 parts by weight of the obtained cholesteric pigment (G2f), 100 parts by weight of a screen ink ("No.2500 Medium" manufactured by Jujo Chemical Co., Ltd.) as a binder solution, and 10 parts by weight of a dedicated dilution agent (Tetron standard solvent) for the screen ink were mixed to produce an ink composition (G2i).

### <Production Example 7: Production of ink composition (B2i) containing blue cholesteric pigment (B2f) >

A blue cholesteric resin layer (B2) with a thickness of 3.5 µm, a cholesteric pigment (B2f) obtained by pulverizing the cholesteric resin layer (B2), and an ink composition (B2i) containing the cholesteric pigment (B2f) were produced by the same method as that of Production Example 6, except that the amount of the liquid crystal compound represented by the formula (X3) was changed to 26.85 parts, and the amount of the chiral agent "LC756" was changed to 2.22 parts.

A reflectance of the cholesteric resin layer (B2) was measured by the above-described method, and the cholesteric resin layer (B2) was found to have a wavelength range in which the reflectance with respect to unpolarized light is 40% or more within a wavelength range of 435 nm to 470 nm. When examined using a circularly polarizing plate, the cholesteric resin layer (B2) reflected clockwise circularly polarized light and transmitted counterclockwise circularly polarized light.

### <Production Example 8: Production of ink composition (R2i) containing red cholesteric pigment (R2f)>

A red cholesteric resin layer (R2) with a thickness of 4.5 µm, a cholesteric pigment (R2f) obtained by pulverizing the cholesteric resin layer (R2), and an ink composition (R2i) containing the cholesteric pigment (R2f) were produced by the same method as that of Production Example 6, except that the amount of the liquid crystal compound represented by the formula (X3) was changed to 27.52 parts, and the amount of the chiral agent "LC756" was changed to 1.55 parts.

A reflectance of the cholesteric resin layer (R2) was measured by the above-described method, and the cholesteric resin layer (R2) was found to have a wavelength range in which the reflectance with respect to unpolarized light is 40% or more within a wavelength range of 625 nm to 680 nm. When examined using a circularly polarizing plate, the cholesteric resin layer (R2) reflected clockwise circularly polarized light and transmitted counterclockwise circularly polarized light.

### <Production Example 9: Production of ink composition (G3i) containing green cholesteric pigment (G3f) having low degree of polarization>

A green cholesteric resin layer (G3) with a thickness of 1.7 µm, a cholesteric pigment (G3f) obtained by pulverizing the cholesteric resin layer (G3), and an ink composition (G3i) containing the cholesteric pigment (G3f) were produced by the same method as that of Production Example 6, except that the applying thickness of the cholesteric liquid crystal composition was changed.

A reflectance of the cholesteric resin layer (G3) was measured by the above-described method, and the cholesteric resin layer (G3) was found to have a wavelength range in which the reflectance with respect to unpolarized light is 40% or more within a wavelength range of 540 nm to 560 nm. When examined using a circularly polarizing plate, the cholesteric resin layer (G3) reflected clockwise circularly polarized light and transmitted counterclockwise circularly polarized light.

### <Example 1>

### (1-1. Production of polarized light separation layer)

The cholesteric resin layer (B1) produced in Production Example 2 was laminated onto a vinyl chloride sheet via a tackiness agent, and the PET film was removed. Furthermore, the cholesteric resin layer (R1) produced in Production Example 3 was laminated onto the cholesteric resin layer (B1) via a tackiness agent and the PET film was removed. For the vinyl chloride sheet, a product with a product number 6-607-01 (thickness: 100 µm, visible light transmittance: 85% or more, and in-plane retardation: 3 nm or less) available from AS ONE Corporation was used. With the above-described operations, a polarized light separation layer having a layer configuration of vinyl chloride sheet / tackiness agent / cholesteric resin layer (B1) / tackiness agent / cholesteric resin layer (R1) was obtained.

### (1-2. Formation of first display layer)

On a surface of the above-mentioned polarized light separation layer on the cholesteric resin layer (R1) side, the ink composition (B2i) produced in Production Example 7 was screen-printed and dried to form a first display layer (B2p) with a thickness of 30 µm having a planer shape of a character.

### (1-3. Formation of second display layer)

On a surface of the above-mentioned polarized light separation layer on the vinyl chloride sheet side, the ink composition (R2i) produced in Production Example 8 was screen-printed and dried to form a second display layer (R2p) with a thickness of 30 µm having a planer shape of a character.

With the above-described operations, an optical layered body having a layer configuration of first display layer (B2p) / polarized light separation layer / second display layer (R2p) was obtained.

### <Example 2>

### (2-1. Production of polarized light separation layer)

The cholesteric resin layer (B1) produced in Production Example 2 was laminated onto a vinyl chloride sheet via a tackiness agent, and the PET film was removed. Furthermore, the cholesteric resin layer (G1) produced in Production Example 1 was laminated onto the cholesteric resin layer (B1) via a tackiness agent and the PET film was removed. Furthermore, the cholesteric resin layer (R1) produced in Production Example 3 was laminated onto the cholesteric resin layer (G1) via a tackiness agent and the PET film was removed. With the above-described operations, a polarized light separation layer having a layer configuration of vinyl chloride sheet / tackiness agent / cholesteric resin layer (B1) / tackiness agent / cholesteric resin layer (G1) / tackiness agent / cholesteric resin layer (R1) was obtained.

### (2-2. Formation of first display layer)

On a surface of the above-mentioned polarized light separation layer on the cholesteric resin layer (R1) side, the ink composition (B2i) produced in Production Example 7 was screen-printed and dried to form a first display layer (B2p) with a thickness of 30 µm having a planer shape of a character.

### (2-3. Formation of second display layer)

On a surface of the above-mentioned polarized light separation layer on the vinyl chloride sheet side, the ink composition (R1i) produced in Production Example 5 was screen-printed and dried to form a second display layer (R1p) with a thickness of 30 µm having a planer shape of a character.

With the above-described operations, an optical layered body having a layer configuration of first display layer (B2p) / polarized light separation layer / second display layer (R1p) was obtained.

### <Comparative Example 1>

### (C1-1. Production of polarized light separation layer)

On an entire surface of a vinyl chloride sheet on one side, the ink composition (G2i) produced in Production Example 6 was screen-printed and dried to form a printed layer (G2p) with a thickness of 30 µm. With the above-described operations, a polarized light separation layer having a layer configuration of vinyl chloride sheet / printed layer (G2p) was obtained.

Separately, the ink composition (G2i) was screen-printed on a PET film and dried to form a printed layer for evaluation with the same thickness as the above-mentioned printed layer (G2p). This printed layer was peeled off from the PET film, and the degree of circular polarization of transmitted light was measured by the method described above and found to be 0.51.

### (C1-2. Formation of first display layer)

On the printed layer (G2p) of the above-mentioned polarized light separation layer, the ink composition (G1i) produced in Production Example 4 was screen-printed and dried to form a first display layer (G1p) with a thickness of 30 µm having a planer shape of a character.

### (C1-3. Formation of second display layer)

On the vinyl chloride sheet of the above-mentioned polarized light separation layer, the ink composition (G1i) produced in Production Example 4 was screen-printed and dried to form a second display layer (G1p) with a thickness of 30 µm having a planer shape of a character.

With the above-described operations, an optical layered body having a layer configuration of first display layer (G1p) / polarized light separation layer / second display layer (G1p) was obtained.

### <Comparative Example 2>

### (C2-1. Production of polarized light separation layer)

On an entire surface of a vinyl chloride sheet on one side, the ink composition (G3i) produced in Production Example 9 was screen-printed and dried to form a printed layer (G3p) with a thickness of 30 µm. With the above-described operations, a polarized light separation layer having a layer configuration of vinyl chloride sheet / printed layer (G3p) was obtained.

Separately, the ink composition (G3i) was screen-printed on a PET film and dried to form a printed layer for evaluation with the same thickness as the above-mentioned printed layer (G3p). This printed layer was peeled off from the PET film, and the degree of circular polarization of transmitted light was measured by the method described above and found to be 0.34.

### (C2-2. Formation of first display layer)

On the printed layer (G3p) of the above-mentioned polarized light separation layer, the ink composition (G2i) produced in Production Example 6 was screen-printed and dried to form a first display layer (G2p) with a thickness of 30 µm having a planer shape of a character.

### (C2-3. Formation of second display layer)

On the vinyl chloride sheet of the above-mentioned polarized light separation layer, the ink composition (G2i) produced in Production Example 6 was screen-printed and dried to form a second display layer (G2p) with a thickness of 30 µm having a planer shape of a character.

With the above-described operations, an optical layered body having a layer configuration of first display layer (G2p) / polarized light separation layer / second display layer (G2p) was obtained.

### <Evaluation of concealability>

The optical layered body produced in each of Examples and Comparative Examples was placed on a stage with the first display layer facing upward, and irradiated with natural light, and first observation was performed. In this first observation, whether the second display layer on the rear side was visually recognized was examined.

Next, the optical layered body was turned over, placed on the stage with the second display layer facing upward, and irradiated with natural light, and second observation was performed. In this second observation, whether the first display layer on the rear side was visually recognized was examined.

The measurement results were determined by the following criteria:
"Visible": The second display layer was clearly visually recognized in the first observation, or the first display layer was clearly visually recognized in the second observation.
"Hardly visible": The second display layer was slightly visually recognized in the first observation, or the first display layer was slightly visually recognized in the second observation.
"Not visible": The second display layer was not visually recognized at all in the first observation, and the first display layer was not visually recognized at all in the second observation.

Ten observers performed the above-mentioned determination. The number of observers who determined each criterion was counted. The determination result "visible" gave 0 point, the determination result "hardly visible" gave 1 point, and the determination result "not visible" gave 2 points. These points were added up to calculate the comprehensive evaluation point in each of Examples and Comparative Examples. The results are shown in Table 1.

**<Table 1>**

| **<Table 1. Results of Examples and Comparative Examples>** | | | | |
|---|---|---|---|---|
| | Example 1 | Example 2 | Comparative Example 1 | Comparative Example 2 |
| first display layer | B2p | B2p | G1p | G2p |
| polarized light separation layer | | | | |
| reflective layer (degree of circular polarization of transmitted light) | R1 (0.807) | R1 (0.807) | G2p (0.51) | G3p (0.34) |
| reflective layer (degree of circular polarization of transmitted light) | B1 (0.843) | G1 (0.832) | - | - |
| reflective layer (degree of circular polarization of transmitted light) | - | B1 (0.843) | - | - |
| second display layer | R2p | R1p | G1p | G2p |
| Evaluation of concealability | | | | |
| Visible | 0 observer | 1 observer | 6 observers | 6 observers |
| Hardly visible | 2 observers | 3 observers | 4 observers | 4 observers |
| Not visible | 8 observers | 6 observers | 0 observer | 0 observer |
| comprehensive evaluation point | 18 | 15 | 4 | 4 |

### Reference Sign List

- 100: optical layered body
- 110: polarized light separation layer
- 110U: first surface
- 110D: second surface
- 111: reflective layer
- 112: reflective layer
- 120: first display layer
- 200: optical layered body
- 230: second display layer
- 300: booklet
- 310: booklet body
- 311: leaf
- 312: opening
- 313: leaf
- 314: leaf
- 320: optical layered body
- 321: polarized light separation layer
- 322: first display layer
- 323: second display layer

## Claims

1. An optical layered body comprising a polarized light separation layer and a first display layer, wherein:
the polarized light separation layer includes a plurality of reflective layers containing a resin having cholesteric regularity;
the plurality of reflective layers each have a polarized light reflection wavelength range in which the reflective layer can reflect circularly polarized light having one rotation direction D_{A} and transmit circularly polarized light having a rotation direction opposite to the one rotation direction D_{A};
the first display layer contains a resin having cholesteric regularity; and
the first display layer has a first display wavelength range in which the first display layer can reflect circularly polarized light having a rotation direction D_{B1} which is the same as the rotation direction D_{A} and transmit circularly polarized light having a rotation direction opposite to the rotation direction D_{B1}.

2. The optical layered body according to claim 1, wherein the polarized light reflection wavelength ranges of the plurality of reflective layers are different from one another.

3. The optical layered body according to claim 1 or 2, wherein at least one of the polarized light reflection wavelength ranges of the plurality of reflective layers contains the first display wavelength range of the first display layer.

4. The optical layered body according to any one of claims 1 to 3, wherein
the plurality of reflective layers include:
a reflective layer B having a reflection center wavelength in a wavelength range of 420 nm to 480 nm;
a reflective layer G having a reflection center wavelength in a wavelength range of 510 nm to 580 nm; and
a reflective layer R having a reflection center wavelength in a wavelength range of 600 nm to 640 nm.

5. The optical layered body according to any one of claims 1 to 4, wherein each of degrees of circular polarization of transmitted light of the plurality of reflective layers is 0.6 or more.

6. The optical layered body according to any one of claims 1 to 5, comprising a second display layer, the polarized light separation layer, and the first display layer in this order, and wherein:
the second display layer contains a resin having cholesteric regularity; and
the second display layer has a second display wavelength range in which the second display layer can reflect circularly polarized light having a rotation direction D_{B2} which is the same as the rotation direction D_{A} and transmit circularly polarized light having a rotation direction opposite to the rotation direction D_{B2}.

7. The optical layered body according to claim 6, wherein at least one of the polarized light reflection wavelength ranges of the plurality of reflective layers contains the second display wavelength range of the second display layer.

8. A method for determining authenticity of the optical layered body according to any one of claims 1 to 7, the method comprising the steps of:
observing, from a side of the first display layer, reflected light of light for illuminating the side of the first display layer of the optical layered body to determine whether the first display layer can be visually recognized; and
observing, from a side opposite with respect to the first display layer, reflected light of light for illuminating the side of the optical layered body opposite with respect to the first display layer to determine whether the first display layer can be visually recognized.

9. A method for determining authenticity of the optical layered body according to claim 6 or 7, the method comprising the steps of:
observing, from a side of the first display layer, reflected light of light for illuminating the side of the first display layer of the optical layered body to determine whether the first display layer and the second display layer can be visually recognized; and
observing, from a side opposite with respect to the first display layer, reflected light of light for illuminating the side of the optical layered body opposite with respect to the first display layer to determine whether the first display layer and the second display layer can be visually recognized.

10. An article comprising the optical layered body according to any one of claims 1 to 7.
